# EUROPÄISCHE PATENTSCHRIFT

(11) **EP 0 348 622 B1**
(45) Veröffentlichungstag und Bekanntmachung des Hinweises auf die Patenterteilung: **23.06.1993**
(21) Anmeldenummer: 89107003.9
(22) Anmeldetag: 19.04.1989
(51) Int. Cl.: F16H 3/12

(54) **Stufenwechselgetriebe**
Stepped shift transmission
Boîte de vitesses à plusieurs étages

(30) Priorität: 29.04.1988 DE 3814527
(43) Veröffentlichungstag der Anmeldung: 03.01.1990
(73) Patentinhaber: Volkswagen Aktiengesellschaft, 38436 Wolfsburg (DE)
(72) Erfinder: Heidemeyer, Paulus, D-3180 Wolfsburg 13 (DE)

(56) Entgegenhaltungen:
- WO-A-86/03269
- AT-A- 372 654
- DE-A- 1 804 533
- DE-A- 1 941 445
- DE-A- 2 246 908
- DE-A- 2 622 927
- DE-A- 3 021 489
- DE-U- 8 806 211
- GB-A- 1 435 517

## Beschreibung

Die Erfindung betrifft ein synchronisiergliederfreies Stufenwechselgetriebe gemäß dem Oberbegriff des Patentanspruchs 1.

Beim Schalten der Getriebegänge in Fahrzeugen mit synchronisiergliederfreien Stufenwechselgetrieben muß die Drehzahl der Getriebeeingangswelle mit Bezug auf diejenige der Abtriebswelle im Leerlauf erhöht werden, wenn in einen niedrigeren Gang geschaltet werden soll. Auf diese Weise sollen die Umfangsgeschwindigkeiten der miteinander zu verbindenden Getriebeglieder im wesentlichen angeglichen werden, um so einen einwandfreien formschlüssigen Eingriff zu ermöglichen. Dementsprechend muß beim Schalten in einen höheren Getriebegang die Drehzahl der Getriebeeingangswelle verringert werden. Die DE-A- 30 21 489 zeigt prinzipielle Möglichkeiten für die Drehzahlbeeinflussung an der Getriebeeingangswelle auf.

Eine dieser Möglichkeiten für die Drehzahlbeeinflussung sieht vor, daß die Drehzahl der Antriebseinheit je nach Schaltvorgang erhöht oder gesenkt wird, um so die über eine Kupplung mit der Antriebseinheit verbundene Getriebeeingangswelle zu beschleunigen oder zu bremsen. Für die Senkung der Drehzahl wird der zusätzliche Einbau einer Bremseinrichtung an der Antriebseinheit notwendig. Für die Erhöhung der Drehzahl werden in der Regel ohnehin vorhandene Einrichtungen zur Verstellung der Drehzahl verwendet. Diese Art der Drehzahlerhöhung ist jedoch mit einem erhöhten Steuerungsaufwand verbunden.

Nach DE-A- 30 21 489 besteht eine weitere Möglichkeit der Drehzahlbeeinflussung darin, daß die Getriebeeingangswelle unabhängig von der Antriebseinheit beschleunigt oder verzögert wird. Die Verzögerung erfolgt dabei durch eine auf die Getriebeeingangswelle mechanisch einwirkende Bremse. Diese Bremse wird erst dann gelöst, wenn die für den Synchronlauf der Zahnräder erforderliche Drehzahl der Getriebeeingangswelle erreicht ist.

Beim Herunterschalten wird für den Synchronlauf der Zahnräder eine Beschleunigung der Getriebeeingangswelle auf höhere Drehzahlen notwendig. Das in der DE-A- 30 21 489 gezeigte Ausführungsbeispiel sieht zu diesem Zweck vor, daß für die Drehzahlerhöhung der Getriebeeingangswelle das Zahnradpaar des ersten Getriebeganges kurzzeitig kraftübertragend verbunden wird, so daß die Getriebeeingangswelle durch die Abtriebswelle antreibbar wird. Die DE-A- 22 46 908 zeigt ein ähnliches Prinzip. Dort wird über eine Reibkupplung die zu beschleunigende Welle mit der Abtriebswelle verbunden. Die in den genannten Schriften offenbarten Lösungen für die von der Antriebseinheit unabhängige Drehzahlbeeinflussung benötigen sowohl für die Beschleunigung als auch für die Verzögerung der Getriebeeingangswelle mindestens je eine Vorrichtung. Diese unabhängig voneinander arbeitenden Vorrichtungen sind konstruktiv aufwendig und bedürfen einer komplizierten Steuerung. Darüber hinaus führt die mechanische Bremsung der Getriebeeingangswelle zu einem Verlust von Energie.

Aus der gattungsbildenden WO-A-86/03269 ist ein Stufenwechselgetriebe bekannt, bei dem eine elektrische Maschine die Synchronisierung der Getriebeeingangswelle in Abhängigkeit von Signalen einer Steuereinrichtung bewerkstelligt. Durch diese elektrische Maschine ist sowohl eine Beschleunigung als auch eine Verzögerung der Getriebeeingangswelle möglich. Ein solches Getriebe ist an sich vorteilhaft, weil gegenüber dem oben genannten Stand der Technik nur noch an einer Vorrichtung eine Umschaltung für die gewünschte Drehzahlbeeinflussung der Getriebeeingangswelle notwendig ist und somit der Steuerungsaufwand insgesamt reduziert wird. Nachteilig ist jedoch bei dem gattungsgemäßen Stufenwechselgetriebe die Anordnung der elektrischen Maschine auf der dem Motor abgewandten Seite des Getriebegehäuses. Diese im übrigen auch aus der GB-A-1 435 517 bekannte Anordnungsart erweist sich insbesondere dann als nachteilig, wenn ein aus Antriebseinheit und Stufenwechselgetriebe bestehender Triebsatz in Kompaktbauweise realisiert werden soll.

Vor diesem Hintergrund liegt der Erfindung die Aufgabe zugrunde, gattungsgemäße Stufenwechselgetriebe unter Vermeidung der zuvor genannten Nachteile zu verbessern.

Diese Aufgabe wird gelöst durch die kennzeichnenden Merkmale des Patentanspruchs 1. Die Unteransprüche enthalten zweckmäßige Weiterbildungen der Erfindung.

Erfindungsgemäß wird also die elektrische Maschine im Antriebsstrang zwischen der Antriebseinheit und der Getriebeeingangswelle angeordnet. Die elektrische Maschine kann dabei sowohl eine Synchronmaschine als auch eine Asynchronmaschine sein. Eine vorzugsweise als Heteropolarmaschine ausgebildete Synchronmaschine gleicht in ihrem Aufbau in etwa einer Asynchronmaschine. Beide Varianten der elektrischen Maschine bestehen im wesentlichen aus einem Läufer, der auf einem rotierenden Bauteil befestigt ist, und einem Ständer, der an ortsfesten Teilen des Getriebegehäuses befestigt ist. Dabei ist der Läufer auf einer von der Antriebseinheit lösbaren Schwungmasse angeordnet und kann so im Zusammenwirken mit dem Ständer für den Synchronisiervorgang zur Drehzahlbeeinflussung der Getriebeeingangswelle herangezogen werden.

In vorteilhafter Weise kann für eine solche Drehzahlsynchronisation auf elektrische Maschinen zurückgegriffen werden, die grundsätzlich aus Elektrohybridfahrzeugen bekannt sind. Ein besonders verlustarmer Betrieb des erfindungsgemäßen Stufenwechselgetriebes wird dadurch ermöglicht, daß die aus der Verzögerung der Getriebeeingangswelle entstehende elektrische Energie einer Energiespeichereinrichtung zugeführt wird, welche im Bedarfsfalle auch Energie zur Beschleunigung der Getriebeingangswelle bereitstellen kann. Die elektrische Maschine arbeitet erfindungsgemäß also auch bei der Synchronisation wechselweise wie ein Generator bzw. Antriebsmotor.

Ein besonders vorteilhaftes Ausführungsbeispiel der Erfindung ist in der Zeichnung dargestellt und wird im folgenden näher erläutert. Es zeigt in schematischer Darstellungweise
- Figur 1:: ein gattungsgemäßes Stufenwechselgetriebe mit einer Synchronisiervorrichtung, die an der der Antriebseinheit abgewandten Seite des Getriebegehäuses angeordnet ist und
- Figur 2:: ein erfindungsgemäßes Stufenwechselgetriebe, bei dem das Energieübertragungssystem der Synchronisiervorrichtung aus einer Asynchronmaschine gebildet ist, deren Kurzschlußkäfigläufer auf der von der Antriebseinheit lösbaren Schwungmasse angeordnet ist.

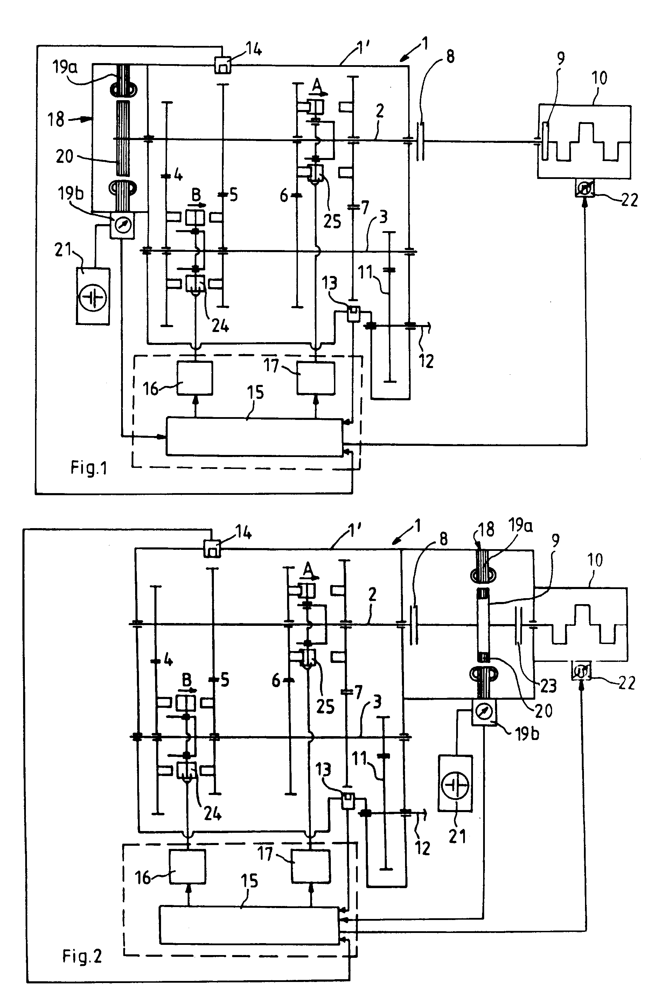

(Die Ausführung nach Figur 1 ist nicht Bestandteil der Erfindung.) In den einzelnen Figuren der Zeichnung ist für jeweils gleiche Bauteile das gleiche Bezugszeichen verwendet worden.

In der Zeichnung der Figur 1 ist ein synchrongliederfreies Stufenwechselgetriebe 1 dargestellt, in dessen Getriebegehäuse 1' im wesentlichen eine Getriebeeingangswelle 2 und eine Abtriebswelle 3 sowie eine Untersetzungsstufe 11 angeordnet sind. Die Getriebeeingangswelle 2 und die Abtriebswelle 3 sind über Zahnradpaare 4, 5, 6, 7 formschlüssig miteinander verbindbar. Antriebsseitig ist die Getriebeeingangswelle 2 des Stufenwechselgetriebes 1 über eine Kupplung 8 mit einer eine Schwungmasse 9 aufweisenden Antriebseinheit 10 verbunden. Der über eine Welle 12 erfolgende Abtrieb des Stufenwechselgetriebes 1 ist mit den in der Zeichnung nicht dargestellten Antriebsrädern des Fahrzeugs verbunden. Die Drehzahl der Abtriebswelle 3 wird durch einen Drehzahlsensor 13 erfaßt, der im Getriebegehäuse 1' dem Zahnradpaar 7 zugeordnet ist. In gleicher Weise wird die Drehzahl der Getriebeeingangswelle 2 von einem Drehzahlsensor 14 erfaßt, der im Getriebegehäuse 1' dem Zahnradpaar 5 zugeordnet ist. Die Drehzahlsensoren 13, 14 sind über Signalübertragungsleitungen mit einer Steuervorrichtung 15 verbunden. Diese Steuervorrichtung 15 ist darüber hinaus mit Betätigungsvorrichtungen 16 und 17 verbunden, die über Schiebemuffen 24 und 25 den Formschluß der jeweilig gewählten Getriebestufe ermöglichen. An der der Kupplung 8 abgewandten Seite des Getriebegehäuses 1' ist ein als elektrische Maschine ausgebildetes Energieübertragungssystem 18 angeordnet. Die elektrische Maschine besteht dabei im wesentlichen aus einem Ständer 19a, einer Maschinensteuerungseinrichtung 19b und einem Kurzschlußkäfigläufer 20. Über die Maschinensteuerungseinrichtung 19b ist eine Energiespeichereinrichtung 21 mit der elektrischen Maschine 18 verbunden. Eine Signalleitung zwischen Maschinensteuerungseinrichtung 19b und Steuervorrichtung 15 ermöglicht die für den jeweiligen Schaltvorgang erforderliche Steuerung des Energieflusses zwischen Getriebeeingangswelle 2 und Energiespeichereinrichtung 21. Eine weitere Signalleitung verbindet die Steuervorrichtung 15 mit einer an der Antriebseinheit 10 angeordneten Drehzahlverstelleinrichtung 22.

Zur näheren Erläuterung wird der Schaltvorgang vom zweiten in den dritten Getriebegang beispielhaft beschrieben. Zunächst wird die Verspannung des Antriebsstranges durch Öffnen der Kupplung 8 aufgehoben. Danach veranlaßt die Steuervorrichtung 15 über die Betätigungsvorrichtung 17 eine Bewegung der auf der Getriebeeingangswelle 2 drehfest angeordneten Schiebemuffe 25 in Pfeilrichtung A. Damit ist die formschlüssige Verbindung der Getriebeeingangswelle 2 mit der Abtriebswelle 3 aufgehoben. Die nun frei drehbare Getriebeeingangswelle 2 wird von der als Generator wirkenden elektrischen Maschine 18 so lange verzögert, bis die Drehzahl des Abtriebszahnrads in der Getriebestufe 5 mit der Drehzahl der auf der Abtriebswelle 3 drehfest angeordneten Schiebemuffe 24 nahezu übereinstimmt. Anschließend wird auf Veranlassung der Steuervorrichtung 15 die Schiebemuffe 24 durch die Betätigungsvorrichtung 16 in Pfeilrichtung B bewegt. Der Formschluß zwischen Getriebeeingangswelle 2 und Abtriebswelle 3 ist somit wieder hergestellt. Der Schaltvorgang wird beendet durch Schließen der Kupplung 8.

Beim Herunterschalten vom dritten in den zweiten Getriebegang läuft der zuvor beschriebene Vorgang in umgekehrter Reihenfolge ab. Die frei bewegliche Getriebeeingangswelle 2 muß jedoch zur Synchronisierung beschleunigt werden. Diese Beschleunigung kann ebenfalls durch die elektrische Maschine 18 erreicht werden. Diese arbeitet dann wie ein elektrischer Antriebsmotor und bezieht ihre Energie aus einem Energiespeicher 21. Dieser Energiespeicher 21 ist so ausgebildet, daß er die beim Hochschalten während der Verzögerung der Getriebeeingangswelle 2 frei werdende Energie einspeichern kann. Darüber hinaus ist auch die Einspeicherung von zusätzlicher Energie denkbar, welche der Antriebseinheit 10 oder dem von der Abtriebswelle 3 bis zu den Antriebsrädern reichenden Abtriebsstrang entnommen wird.

Bei der Beendigung des Schaltvorganges kann ein für den Fahrzeuginsassen unangenehmes Rucken des gesamten Fahrzeuges auftreten, wenn vor dem Schließen der Kupplung 8 die Getriebeeingangswelle 2 und die Antriebseinheit 10 unterschiedliche Drehzahlen aufweisen. Es ist deshalb eine Drehzahlverstellvorrichtung 22 an der Antriebseinheit 10 angeordnet, welche in Abhängigkeit von den Signalen der Steuervorrichtung 15 während des Synchronisiervorganges die Drehzahl der Antriebseinheit 10 an die Drehzahl der Getriebeeingangswelle 2 angleicht. Die während des Synchronisiervorganges beispielsweise in den Leerlauf zurückgefallene Antriebseinheit 10 müßte beschleunigt werden, um in etwa die im Augenblick der Synchronisation auftretende Drehzahl der Getriebeeingangswelle 2 zu erreichen. Die noch verbleibenden geringfügigen Drehzahldifferenezn zwischen Antriebseinheit 10 und Getriebeeingangswelle 2 werden während des Schließvorganges der Kupplung 8 aufgehoben. Auf diese Weise erhält man einen sehr gleichmäßigen Drehmomentenübergang und ermöglicht so einen Schaltvorgang mit Komfort.

Das in Figur 2 dargestellte Stufenwechselgetriebe 1 ist innerhalb des Getriebegehäuses 1' in Aufbau und Funktion identisch mit dem in Figur 1 dargestellten Stufenwechselgetriebe. Die elekrische Maschine 18 ist hier jedoch zwischen der Antriebseinheit 10 und der Getriebeeingangswelle 2 angeordnet. Bei diesem erfindungsgemäßen Ausführungsbeispiel ist die Schwungmasse 9 von der Antriebseinheit 10 durch eine zweite Kupplung 23 lösbar. Der Läufer 20 der elektrischen Maschine 18 ist auf der Schwungmasse 9 angeordnet. Der Ständer 19a der elektrischen Maschine 18 ist an ortsfesten, die Schwungmasse 9 umgebenden Gehäuseteilen 1' befestigt. Beim Hochschalten vom zweiten in den dritten Gang wird der Antriebsstrang zunächst durch Öffnen der zweiten Kupplung 23 unterbrochen, während die Kupplung 8 geschlossen bleibt. Der Formschluß zwischen Getriebeeingangswelle 2 und Abtriebswelle 3 wird durch Bewegung der Schiebemuffe 25 in Pfeilrichtung A aufgehoben. Damit ist das aus Getriebeeingangswelle 2, Kupplung 8 und Schwungmasse 9 bestehende System frei beweglich. Die beim Hochschalten erforderliche Verzögerung der Getriebeeingangswelle 2 kann nun von der als Generator wirkenden elektrischen Maschine 18 erreicht werden. Die dabei frei gewordene Energie wird dem Speicher 21 zugeführt, der beispielsweise als eine Batterie ausgebildet ist. Ist durch die Verzögerung der Getriebeeingangswelle 2 in etwa ein Gleichlauf zwischen der drehfest auf der Abtriebswelle 3 verschiebbaren Schiebemuffe 24 und dem Abtriebszahnrad der Zahnradstufe 5 erzielt worden, so erfolgt durch Verschieben der Schiebemuffe 24 in Pfeilrichtung B die Herstellung des Formschlusses zwischen Getriebeeingangswelle 2 und Abtriebswelle 3. Im Anschluß daran wird die zweite Kupplung 23 geschlossen, so daß die Antriebsleistung der Antriebseinheit 10 wieder auf die Antriebsräder übertragen werden kann. Die Kupplung 23 kann aber bei Formschluß zwischen Getriebeeingangswelle 2 und Abtriebswelle 3 auch geöffnet bleiben, wenn allein mit der elektrischen Maschine 18 Antriebsleistung erzeugt werden soll.

Beim Herunterschalten vom dritten in den zweiten Gang verläuft der Schaltvorgang in umgekehrter Reihenfolge. Wie unter Figur 1 schon beschrieben, wird beim Herunterschalten jedoch eine Beschleunigung der Getriebeeingangswelle 2 notwendig. Die für die Beschleunigung notwendig werdende Energie entnimmt die elektrische Maschine 18 auch bei der in Figur 2 dargestellten Anordnung einem Energiespeicher 21. Bei geöffneter zweiter Kupplung 23 wird das aus Getriebeeingangswelle 2, Kupplung 8 und Schwungmasse 9 bestehende System bis zum Synchronlauf der formschlüssig miteinander zu verbindenden Getriebeglieder beschleunigt. Anschließend wird durch eine entsprechende Schiebemuffenbewegung und das Schließen der zweiten Kupplung 23 die Antriebsleistung der Antriebseinheit 10 wieder auf die Antriebsräder übertragen.

Das in Figur 2 dargestellte Ausführungsbeispiel des erfindungsgemäßen Stufenwechselgetriebes 1 ist in seinem prinzipiellen Aufbau mit bekannten Antriebsanordnungen für Elektrohybridfahrzeuge vergleichbar. Im Gegensatz zu diesen bisher bekannten Anordnungen ermöglicht die elektrische Maschine 18 bei dem erfindungsgemäßen Ausführungsbeispiel zusätzlich das synchrongliederfreie Schalten im Stufenwechselgetriebe 1. Damit wird ohne zusätzlichen konstruktiven Aufwand die Nutzung der elektrischen Maschine als Synchronisiervorrichtung möglich. Sie kann unabhängig von der Antriebseinheit sowohl die Beschleunigung als auch die Verzögerung der Getriebeeingangswelle 2 bewirken und ist von der ohnehin vorhandenen Steuervorrichtung 15 mit einfachen Mitteln steuerbar.

Analog zu dem in Figur 1 dargestellten Ausführungsbeispiel ist auch für das in Figur 2 dargestellte Ausführungsbeispiel ein gleichmäßiger Drehmomentenübergang zwischen der Antriebseinheit 10 und dem aus Getriebeeingangswelle 2, Kupplung 8 und Schwungmasse 9 bestehenden System über die Drehzahlverstellvorrichtung 22 möglich.

## Patentansprüche

1. Synchronisiergliederfreies Stufenwechselgetriebe (1) für ein Fahrzeug mit einer Getriebeeingangswelle (2), die über zumindest eine Kupplung (23) mit einer Antriebseinheit (10) verbindbar ist, und mit einer mit den Antriebsrädern des Fahrzeugs verbundenen Antriebswelle (3), die über Zahnräder (4, 5, 6, 7) der jeweilig gewählten Getriebestufe formschlüssig mit der Getriebeeingangswelle (2) verbunden ist, sowie mit einer Synchronisiervorrichtung, die ein als elektrische Maschine ausgebildetes Energieübertragungssystem (18) aufweist, welches unabhängig von der Antriebseinheit (10) sowohl die Beschleunigung als auch die Verzögerung der Getriebeeingangswelle (2) ermöglicht, dadurch gekennzeichnet, daß die elektrische Maschine
- einen Läufer (20) aufweist, der im Antriebsstrang zwischen der Antriebseinheit (10) und der Getriebeeingangswelle (2) auf einer von der Antriebseinheit (10) lösbaren Schwungmasse (9) angeordnet und von einem an ortsfesten Gehäuseteilen (Getriebegehäuse 1) befestigten Ständer (19a) umgeben ist,
- mit einer der Synchronisiervorrichtung zugeordneten, elektrische Energie speichernden Energiespeichereinrichtung (21) verbunden ist, durch die in Abhängigkeit von Signalen einer Steuereinrichtung (15) für die Synchronisierung die jeweils benötigte bzw. freiwerdende Energie bereitstellbar bzw. speicherbar ist.

2. Anordnung nach Anspruch 1, dadurch gekennzeichnet, daß die elektrische Maschine durch eine Asynchronmaschine gebildet ist, deren Kurzschlußkäfigläufer (20) auf der mittels einer zweiten Kupplung (23) von der Antriebseinheit (10) lösbaren Schwungmasse (9) und deren Ständer (19a) an ortsfesten, die Schwungmasse (9) umgebenden Gehäuseteilen angeordnet ist.

3. Anordnung nach Anspruch 1, dadurch gekennzeichnet, daß die elektrische Maschine durch eine Synchronmaschine, vorzugsweise eine gezahnte Heteropolarmaschine, gebildet ist, deren Läufer auf der mittels einer zweiten Kupplung (23) von der Antriebseinheit (10) lösbaren Schwungmasse und deren Ständer (19a) an ortsfesten, die Schwungmasse (9) umgebenden Gehäuseteilen (1') angeordnet ist.

## Claims

1. Stepped change speed gearbox (1) without a synchronising member for a motor vehicle having a transmission input shaft (2), which can be connected to a drive unit (10) by way of at least one clutch (23) and having a drive shaft (3) connected to the drive wheels of the motor vehicle and the said drive shaft (3) is connected in a form-locking manner to the transmission input shaft (2) by way of the gear wheels (4, 5, 6, 7) of the respective selected gear step and furthermore having a synchronising device which comprises an energy transmission system (18) formed as an electrical machine, the said system rendering it possible both to accelerate and also to retard the transmission input shaft (2) independently from the drive unit (10), characterised in that the electrical machine
- comprises a rotor (20) which is disposed in the drive phase between the drive unit (10) and the transmission input shaft (2) on an inertia flywheel (9) which is releasable from the drive unit (10) and the said rotor is enveloped by a stator (19a) attached to the fixed housing parts (gearbox housing 1)
- is connected to an energy storage device (21) which stores electrical energy and is associated with the synchronising device and the said energy storage device enables the respective required and/or released energy to be made available and/or stored for the synchronisation in dependence upon signals from a control device (15).

2. Arrangement according to claim 1, characterised in that the electrical machine is formed by means of an asynchronous machine, whose short-circuited cage rotor (20) is disposed on the inertia flywheel (9) which is releasable from the drive unit (10) by means of a second clutch (23) and the rotor (19a) of the said machine is disposed on the fixed housing parts enveloping the inertia flywheel (9).

3. Arrangement according to claim 1, characterised in that the electrical machine is formed by means of a synchronous machine, preferably a toothed heteropolar machine, whose rotor is disposed on the inertia flywheel (9) which is releasable from the drive unit (10) by means of a second clutch (23) and the stator (19a) of said machine is disposed on the fixed housing parts (1') enveloping the inertia flywheel (9).

## Revendications

1. Boîte de vitesses (1) sans organe de synchronisation, destinée à un véhicule comprenant un arbre d'entrée (2) de la boîte qui peut être relié par un moins un embrayage (23) à un groupe de commande (10), ainsi qu'un arbre de sortie (3) relié aux roues motrices du véhicule et relié par complémentarité de formes à l'arbre d'entrée (2) de la boîte par les pignons (4, 5, 6, 7) des étages particuliers adoptés de la boîte, ladite boîte de vitesses comprenant également un dispositif de synchronisation comprenant un système (18) de transmission d'énergie qui est constitué d'un moteur électrique et qui permet aussi bien une accélération qu'une décélération de l'arbre d'entrée (2) de la boîte indépendamment du groupe de commande (10), caractérisée en ce que le moteur électrique comprend un rotor (20) qui est disposé dans le train de commande entre le groupe de commande (10) et l'arbre d'entrée (2) de la boîte sur un volant (9) débrayable du groupe de commande (10) et qui est entouré par un stator (19a) fixé sur des éléments fixes d'enveloppe (enveloppe 1' de la boîte), un dispositif (21) d'accumulation d'énergie électrique étant combiné avec le dispositif de synchronisation et pouvant mettre à disposition l'énergie nécessaire à la synchronisation ou accumuler l'énergie libérée en fonction de signaux d'un dispositif de commande (15).

2. Montage selon la revendication 1, caractérisé en ce que le moteur électrique est formé d'un moteur asynchrone à cage d'écureil dont le rotor en court-circuit (20) est disposé sur le volant (9) pouvant être désaccouplé du groupe de commande (10) au moyen d'un second embrayage (23) et dont le stator (19a) est disposé sur des éléments fixes de l'enveloppe qui entourent le volant (9).

3. Montage selon la revendication 1, caractérisé en ce que le moteur électrique est formé d'un moteur synchrone, de préférence d'un moteur hétéropolaire cranté dont le rotor est disposé sur le volant pouvant être désaccouplé du groupe de commande (10) au moyen d'un second accouplement (23) et dont le stator (19a) est disposé sur des éléments fixes (1') de l'enveloppe qui entourent le volant (9).
